# EUROPEAN PATENT APPLICATION

(11) **EP 4 686 891 A1**
(43) Date of publication of application: **04.02.2026**
(21) Application number: 25193414.7
(22) Date of filing: 01.08.2025
(51) Int. Cl.: F24F 6/12, F24F 6/00, F24F 140/00

(54) **HUMIDIFIER**

(30) Priority: 02.08.2024 KR 20240103251
(71) Applicant: LG Electronics Inc., Yeongdeungpo-gu Seoul 07336 (KR)
(72) Inventor: KU, Myungjin, Seoul (KR); LEE, Sangheon, Seoul (KR); LEE, Kunyoung, Seoul (KR); LEE, Donggun, Seoul (KR); JEON, Jihye, Seoul (KR)
(74) Representative: Vossius & Partner Patentanwälte Rechtsanwälte mbB

(57) **Abstract**

The present disclosure relates to a humidifier. The humidifier includes a water tank configured to form a space for storing water; a humidification module disposed below the water tank and configured to generate humidified air using water supplied from the water tank; a middle tray disposed between the humidification module and the water tank, and including a plurality of weight sensors configured to sense a weight of the water tank; and an inner shell disposed below the water tank and configured to transfer a load of the water tank to the middle tray. A plurality of lower protrusions are disposed on the bottom of the inner shell and configured to press the plurality of weight sensors, respectively. The middle tray includes a hole formed to supply the water stored in the water tank to the humidification module. The plurality of weight sensors are disposed spaced apart around the hole.

## Description

### BACKGROUND OF THE INVENTION

### 1. Field of the invention

The present disclosure relates to a humidifier, and more particularly, to a humidifier that detects water level by a weight sensor.

### 2. Description of the Related Art

A humidifier is a device that evaporates water to emit humidified air with a high moisture content.

The humidifier requires a water tank that holds water since it generates humidified air from water. The user needs to check the water level in the water tank to know when it's time to supply water to the water tank.

A floating valve, which moves as the water level changes, may be used to detect the water level in the water tank. Also, the water level may be detected by sensing the weight of the water tank.

Patent Registration No. KR 10-2505499 B1 discloses a humidifier that detects water level based on weight.

Incidentally, such a humidifier requires water not to enter a weight measurement area. Also, correct placement of the water tank in the weight measurement area is crucial for accurately detecting the water level in the water tank.

Another issue is that placing another component between the water tank and the weight measuring component can lead to challenges in accurately sensing the weight of the water tank.

### SUMMARY OF THE INVENTION

Therefore, the present disclosure has been made in view of the above problems, and it is an object of the present disclosure to solve the above-described problems and other problems.

Another object of the present disclosure is to provide a humidifier in which the water level in the water tank is stably detected.

Yet another object of the present disclosure is to provide a humidifier in which the water level in the water tank is precisely detected.

A further object of the present disclosure is to provide a humidifier that prevents water from entering a middle tray where a weight sensor is placed.

An embodiment of the present disclosure provides a humidifier comprising: a water tank configured to form a space for storing water; and a humidification module disposed below the water tank and configured to generate humidified air using water supplied from the water tank. The humidifier comprises: a middle tray disposed between the humidification module and the water tank, and including a plurality of weight sensors configured to sense a weight of the water tank; and an inner shell disposed below the water tank and configured to transfer a load of the water tank to the middle tray.

A plurality of lower protrusions are disposed on the bottom of the inner shell and configured to press the plurality of weight sensors, respectively. The middle tray includes a hole formed to supply the water stored in the water tank to the humidification module. The plurality of weight sensors are disposed spaced apart around the hole.

The middle tray includes a plurality of sensor recesses which are set back downwardly such that the plurality of lower protrusions are respectively positioned thereon.

A sensor cover is disposed on the sensor recesse to cover the top of the weight sensor.

A sensor recess flange protrudes upward from a circumferential surface of each of the plurality of sensor recesses. The sensor recess flange protrudes upward from a circumferential surface of each of the plurality of sensor recesses.

A cover rib is disposed to protrude inward from an inner circumferential surface of the sensor recess flange, . The sensor cover is mounted on the cover rib.

The plurality of weight sensors are spaced apart longitudinally and laterally relative to the hole.

When the inner shell is disposed on the middle tray, the plurality of lower protrusions are respectively disposed on the plurality of weight sensors.

The inner shell includes a fixing projection protruding downward to fix the inner shell. The fixing projection is spaced apart from the plurality of lower protrusions.

A fixing slit is formed on one side of a circumferential surface of the fixing projection. A fixing rib to be inserted into the fixing slit is disposed on the middle tray.

When the fixing rib is inserted into the fixing slit, an upper end of the fixing rib is spaced apart from the inner shell.

The middle tray includes a pair of fixing protrusions spaced apart on either side of the fixing rib.

The each of the pair of fixing protrusions include a first inclined surface inclined in a direction in which the fixing rib is disposed.

The inner shell includes a shell through-hole formed above the hole.

The inner shell includes: a pair of first lower protrusions positioned on one side of the shell through-hole; and pair of second lower protrusions disposed on the opposite side of the shell through-hole with respect to the pair of first lower protrusions.

The inner shell includes: a first connecting rib connecting the pair of first lower protrusions each other; and a second connecting rib connecting the pair of second lower protrusions each other.

Each of the first connecting rib and the second connecting rib is spaced apart by a predetermined distance from a upper surface of the middle tray.

A sensor cover is disposed on the sensor recesses to cover the upper side of the weight sensor. The middle tray includes a press body disposed between the sensor cover and the weight sensor.

An embodiment of the present disclosure provides a humidifier comprising: a water tank configured to form a space for storing water; and a humidification module disposed below the water tank and configured to generate humidified air using water supplied from the water tank. The humidifier comprises: a middle tray disposed between the humidification module and the water tank, and including a plurality of weight sensors configured to sense a weight of the water tank; and an inner shell disposed below the water tank and configured to transfer a load of the water tank to the middle tray.

A plurality of lower protrusions are disposed on the bottom of the inner shell and configured to press the plurality of weight sensors, respectively. The middle tray includes a hole formed to supply the water stored in the water tank to the humidification module. The plurality of weight sensors are disposed at symmetrical positions on the middle tray.

An imaginary line connecting each pair of weight sensors disposed in on opposite sides relative to the first hole passes through the hole.

The plurality of weight sensors are disposed at equal distances from a center of the hole.

A center point of a polygon formed by the plurality of weight sensors is located at the hole.

Specific details of other embodiments are included in the detailed description and drawings.

A humidifier of the present disclosure has one or more of the following effects.

First, the water level in the water tank can be stably detected by means of a structure in which the position of the water tank placed over the middle tray is stably maintained.

Second, the water level in the water tank can be precisely detected because a weight sensor is placed in a plurality of regions of the middle tray. Also, the weight of the water tank can be precisely sensed because there is no component that pushes down vertically on the middle tray, except at lower protrusions.

Third, it is possible to prevent water from entering the weight sensor by placing a sensor cover on top of the weight sensor. The weight sensor is capable of stable operation.

The effects of the present disclosure are not limited to the above-mentioned effects, and other effects that are not mentioned may be obviously understood by those skilled in the art from the claims.

### BRIEF DESCRIPTION OF THE DRAWINGS

FIG. 1 is a perspective view of a humidifier according to one embodiment of the present disclosure.
FIG. 2 is a plan view of FIG. 1.
FIG. 3 is a cross-sectional view taken along III-III' of FIG. 2.
FIG. 4 is an exploded perspective view of an inner shell with a water tank placed therein and a middle tray according to an embodiment of the present disclosure.
FIG. 5 is a perspective view of the inner shell where the water tank is placed, according to an embodiment of the present disclosure.
FIG. 6 is a bottom view of FIG. 5.
FIG. 7 is a side view of FIG. 5.
FIG. 8 is a plan view of the middle tray according to an embodiment of the present disclosure.
FIG. 9 is a perspective view of FIG. 8.
FIG. 10 is a cross-sectional view of one side of the middle tray of FIG. 8.
FIG. 11 is an exploded perspective view of a tray body and a tray base, according to an embodiment of the present disclosure.
FIG. 12 is a plan view of the tray base according to an embodiment of the present disclosure.
FIG. 13 is a perspective view of FIG. 11.
FIG. 14 is a cross-sectional view of one side of the inner shell with the water tank placed therein when the inner shell is placed over the middle tray, according to an embodiment of the present disclosure.
FIG. 15 is a cross-sectional view of another side of the inner shell with the water tank placed therein when the inner shell is placed over the middle tray, according to an embodiment of the present disclosure.

### DETAILED DESCRIPTION OF THE PREFERRED EMBODIMENTS

Advantages and features of the present disclosure and methods of achieving them will become apparent with reference to the embodiments described below in detail in conjunction with the accompanying drawings. However, the present disclosure is not limited to the embodiments disclosed below, but may be implemented in various different forms, and these embodiments are provided only to allow the disclosure of the present disclosure to be complete, and to completely inform those of ordinary skill in the art to which the present disclosure belongs, the scope of the invention, and the present disclosure is only defined by the scope of the claims. Like reference numerals refer to like elements throughout the specification.

Hereinafter, the present disclosure will be described with reference to the drawings for explaining a humidifier according to embodiments of the present disclosure.

A humidifier of the present disclosure may generate humidified air from water by ultrasonic vibration. A humidifier of the present disclosure may generate humidified air by heating water. A humidifier of the present disclosure may generate humidified air produced by ultrasonic vibration and humidified air produced by heating.

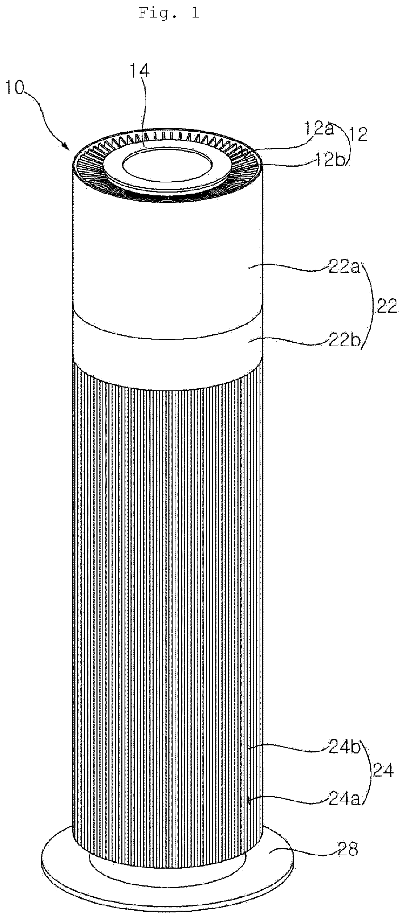

Referring to FIG. 1, an exterior of a humidifier of the present disclosure will be described.

The humidifier includes a casing 10 that forms the exterior, with an inlet 24a and an outlet 12a formed therein.

The casing 10 may have an overall cylindrical shape.

The casing 10 may include an intake grille 24 which forms the inlet 24a through which air is admitted, and a discharge grille 12 which forms the outlet 12a through which air is discharged. The inlet 24a may be formed on a circumferential surface of the casing 10 having a cylindrical shape. The outlet 12a may be formed on a top surface of the casing 10 having a cylindrical shape. The humidifier of the present disclosure may allow air to be admitted through the circumferential surface and be discharged through the top surface.

The intake grille 24 includes a plurality of ribs 24b that extend vertically. The plurality of grilles 24b may be spaced apart in a circumferential direction of the intake grille 24. A plurality of inlets 24a may be formed between the plurality of grilles 24b.

The casing 10 may include a water tank cover 14 disposed on top of the water tank 100.

The humidifier may include a discharge grille 12 forming the outlet 12a and a water tank cover 14 disposed on top of the water tank 100.

The discharge grille 12 may be configured to be separated upward from an outer shell 22 to be described later. The water tank cover 14 may be configured to be separated from the discharge grille 12 or from the water tank 100 to be described later.

The discharge grille 12 may include a plurality of ribs 12b that extend radially from the outer periphery of the water tank cover 14. The plurality of ribs 12b disposed at the discharge grille 12 may be spaced apart circumferentially from the outer periphery of the water tank cover 14.

The casing 10 may include an outer shell 22 for directing the air moving inside it to the outlet 12a.

The outer shell 22 includes an upper outer shell 22a disposed under the discharge grille 12 and a lower outer shell 22b disposed under the upper outer shell 22a. The lower outer shell 22b may be formed of a transparent material.

The humidifier may include a base 28 disposed under the casing 10, which causes the casing 10 to be spaced a certain distance apart from the ground. An upper end portion of the base 28 may be connected to a lower end portion of the casing 10.

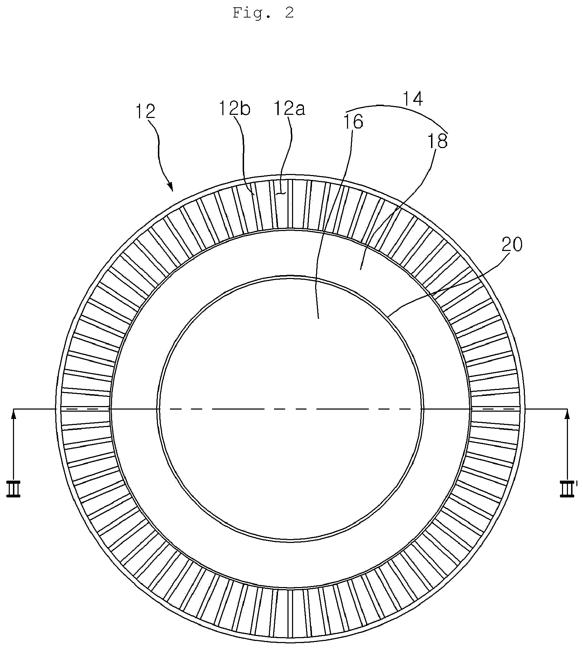

Hereinafter, a top portion of the humidifier will be described with reference to FIG. 2.

The water tank cover 14 may include a central cover 16 and a peripheral cover 18 disposed around the central cover 16. The central cover 16 may bulge upward toward the center. A water supply hole 20 may be formed between the peripheral cover 18 and the central cover 16 to allow water to move into the water tank 100.

A plurality of outlets 12a may be formed between the plurality of ribs 12b disposed at the discharge grille 12.

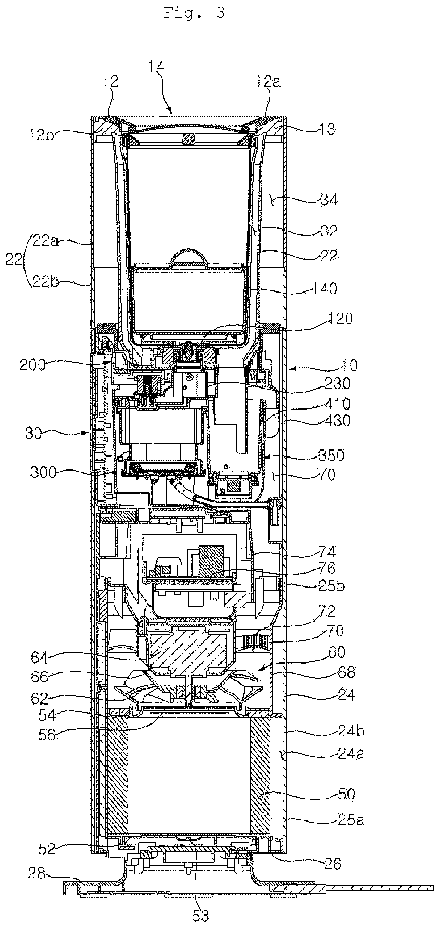

Hereinafter, an internal construction of the humidifier will be described with reference to FIG. 3.

The humidifier includes a filter unit disposed inside the casing 10, for filtering the air admitted into the inlets 24a. The humidifier includes a blower 60 disposed inside the casing 10, for moving the air inside the casing 10 from the inlets 24a to the outlets 12a. The humidifier includes a water tank 100 disposed inside the casing 10, for holding water. The humidifier includes a humidification module that generates humidified air from water supplied from the water tank 100.

The humidifier may include a base 28. The base 28 may cause the casing 10 to be spaced upward from the ground. The base 28 may be connected to a bottom wall 26 of the casing 10.

The casing 10 may include a bottom wall 26 which covers the bottom of the intake grille 24.

An upper end portion of the base 28 may be connected to the bottom wall 26. The bottom wall 26 may be disposed in such a way as to cover a bottom surface of the humidifier which is spaced upward from the ground by the base 28.

The intake grille 24 may cover the outsides of a filter 50 and a blower housing 68 to be described below. The intake grille 24 may have a plurality of inlets 24a that are vertically formed and circumferentially spaced apart. The inlets 24a may be formed around where the filter 50 is placed. The inlets 24a may be formed in a lower portion of the intake grille 24. The lower portion of the intake grille 24 may be formed with inlets 24a, and an upper portion of the intake grille 24 may be enclosed to protect the internal construction of the humidifier.

The outer shell 22 may be disposed over the intake grille 24.

The filter unit may allow the air admitted through the inlets 24a to be filtered through the filter 50. The filter unit may allow the filtered air to move upward.

The filter unit includes a filter 50 for filtering the air admitted through the inlets 24a and a filter mounting portion for fixing the filter 50 in place inside the casing 10.

The filter 50 may be cylindrical. Thus, the filter 40 is able to filter air drawn in from longitudinal and lateral directions perpendicular to the vertical direction. The air admitted through the inlets 24a may move to an inside space of the filter 50. The air passed through the filter 50 may move to the blower 60 disposed over the filter 50.

The filter mounting portion includes a lower plate 52 disposed on a lower side of the filter 50, an upper plate 54 disposed on an upper side of the filter 50, and a supporter (not shown) connecting the lower plate 52 and the upper plate 54.

The lower plate 52 is disposed on a lower side of the filter 50. The lower plate 52 may move up and down and detect whether the filter 50 is placed. A fan sterilizer 53 may be disposed in the center of the lower plate 52 to emit ultraviolet light upward.

The fan sterilizer 53 may sterilize a blower fan 62 to be described below or the inside of the filter 50.

An orifice 56 is formed in the upper plate 54. The orifice 56 may be formed in the center of the upper plate 54. The orifice 56 may allow the air admitted to the inside of the filter 50 to move to the blower fan 62. An inner circumferential end of the upper plate 54 may be bent upward so as to guide the upward movement of air in the inside space of the filter 50 to the blower fan 62.

The supporter may connect the lower plate 52 and the upper plate 54. The supporter may be circumferentially spaced apart.

The blower 60 includes a blower fan 62 that forms an air flow within the casing 10 and a fan motor 64 that rotates the blower fan 62.

The blower fan 62 may have a fan intake opening on one side facing the orifice 56 and a fan discharge opening on the opposite side of the fan intake opening. The blower fan 62 may be a diagonal flow fan in which the fan discharge opening on the opposite side of the fan intake opening faces in a centrifugal direction. The blower fan 62 may include a hub connected to the fan motor 64, a shroud spaced apart from the hub by a certain distance and forming the fan intake opening, and a blade extending radially to connect the hub and the shroud.

The blower fan 62 may be activated to send air upward from below. The blower fan 62 may draw air toward the orifice 56 and discharge air to the blower housing 68 where a diffuser 72 is placed.

The fan motor 64 may be disposed over the blower fan 62.

The blower includes a motor cover 66 that covers the outside of the fan motor 64, and a blower housing 68 spaced radially outward from the motor cover 66, that guides the upward movement of air blown by the blower fan 62.

A blower channel 70 along which the air blown by the blower fan 62 moves upward may be formed between the motor cover 66 and the blower housing 68. The blower channel 70 may extend as far as where a humidification module housing 410 and a channel housing 430 are formed.

The intake grille 24 may be disposed on the outside of the blower housing 68.

The blower 60 includes a diffuser 72 disposed between the motor cover 66 and the blower housing 68, that reduces rotational components of the air blown upward by the blower fan 62. A plurality of diffusers 72 may be circumferentially spaced apart.

A control box 74 forming a space within which a circuit board 76 is placed may be disposed over the motor cover 66. The control box 74 may be spaced apart inwardly from the blower housing 68. Thus, the blower channel 70 may be formed in the space between the control box 74 and the blower housing 68 as well.

A plurality of circuit boards 76 may be placed within the control box 74. The humidification module includes a first humidification reservoir 300 which heats water. The humidification module includes a second humidification reservoir 350 which generates humidified air from water. The humidification module may include a humidification module housing 410 which covers the peripheries of the first humidification reservoir 300 and the second humidification reservoir 350. The channel housing 430 may be disposed around the outer periphery of the humidification module housing 410. The blower channel 70 may be formed between the humidification module housing 410 and the channel housing 430.

The humidifier includes a water tank 100 forming a space in which water is held, an inner shell 180 forming a space in which the water tank 100 is placed, and a middle tray 200 disposed under the inner shell 180.

The water tank 100 may have an inner reservoir 102 placed inside an outer reservoir 160. Thus, a connector 120 may be placed in a through-hole 164 of the outer reservoir 160.

The outer reservoir 160, while placed inside the inner shell 180, may be disposed over the middle tray 200. The middle tray 200 may be a structure that supports the outer reservoir 160 and the inner reservoir 102. Thus, a loads of the inner reservoir 102, the outer reservoir 160, and the inner shell 180 may be transferred to the middle tray 200.

The outer reservoir 160 is placed around the outer periphery of the inner reservoir 102.

The inner reservoir 102 may be placed inside the outer reservoir 160. When the inner reservoir 102 is placed inside the outer reservoir 160, an outer circumferential surface of the inner reservoir 102 may be disposed in such a way as to make contact with an inner circumferential surface of the outer reservoir 160.

The humidifier includes a water softener 140 placed within the inner reservoir 102.

The water softener 140 is placed inside the inner reservoir 102. The water softener 140 may be fixed in place as it is connected to the connector 120 placed inside the inner reservoir 102.

The inner shell 180 is spaced apart from the outer reservoir 160. The inner shell 180 is spaced apart from the water tank 100. A first discharge passage 32 along which humidified air moves is formed between the inner shell 180 and the outer reservoir 160.

A second discharge passage 34 is formed between the outer shell 22 and the inner shell 180.

The inner shell 180 and the outer shell 22 are spaced apart from each other and form the second discharge passage 34. Filtered clean air blown by the blower 60 may move along the second discharge passage 34.

The discharge grille 12 may be disposed over the first discharge passage 32 and the second discharge passage 34 which will be described below.

The discharge grille 12 may be have a certain height in the vertical direction. Thus, a mixture passage 13 may be formed between the plurality of ribs 12b of the discharge grille 12. In the mixture passage 13, the air moving through the first discharge passage 32 and the air moving through the second discharge passage 34 may be mixed together.

The plurality of ribs 12b may be formed in such a way that outer peripheral ends thereof are disposed higher than inner peripheral ends thereof. Thus, the air moving through the first discharge passage 32 and the second discharge passage 34 may be guided radially inwardly.

A display 30 is disposed on one side of the casing 10. The display 30 allows the user to control the power or operation of the humidifier. The display 30 may be a display that shows the operating status or the like of the humidifier to the user.

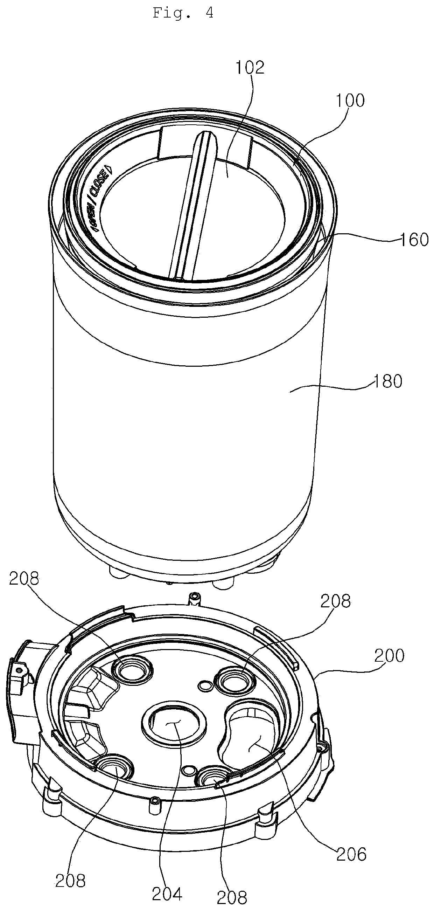

Referring to FIG. 4, the middle tray, the inner shell, and the water tank will be described.

The water tank 100 may be placed within the inner shell 180. The inner reservoir 102 and the outer reservoir 160 may be placed within the inner shell 180.

The inner shell 180 may be disposed over the middle tray 200.

The middle tray 200 may be disposed over the humidification module. The middle tray 200 may be disposed between the humidification module and the water tank 100. The middle tray 200 may have a first hole 204 for a supply tube to penetrate and a second hole 206 for the humidified air generated by the humidification module to move through.

A plurality of sensor recesses 208 and a plurality of projections may be formed on the middle tray 200 to fix the overlying inner shell 180 in place.

Weight sensors 226 and 227 may be disposed under the sensor recesses 208.

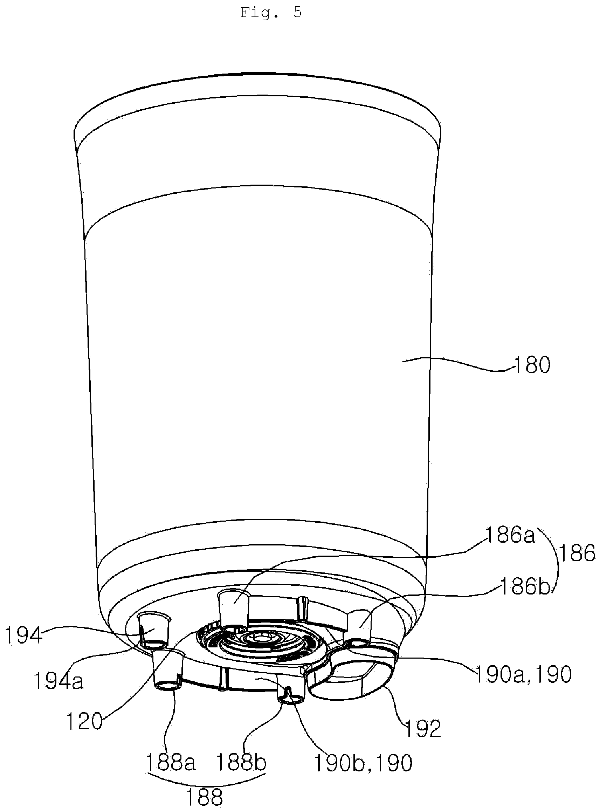

Referring to FIGS. 5 through 7, a structure of the inner shell will be described.

The water tank 100 and the connector 120 are placed within the inner shell 180. Part of the construction of the connector 120 may be exposed out of the inner shell 180.

The inner shell 180 forms a space inside where the water tank 100 is placed. The inner shell 180 is configured to be connected to the water tank 100. Thus, when the inner shell 180 is placed over the middle tray 200, a load of the water tank 100 also may be transferred to the middle tray 200.

The inner shell 180 has a structure in which a top surface thereof is open. A shell through-hole 184 is formed in a bottom surface of the inner shell 180, for part of the construction of the connector 120 to penetrate. The shell through-hole 184 is disposed over the first hole 204 of the middle tray 200.

An exhaust connecting tube 192 is disposed on the bottom surface of the inner shell 180 to supply the humidified air released from the humidification module to the first discharge passage 32. The exhaust connecting tube 192 is disposed over the second hole 206 of the middle tray 200.

A plurality of lower protrusions 186 and 188 are disposed on the bottom surface of the inner shell 180, placed over the weight sensors 226 and 227 of the middle tray 200 and spaced apart longitudinally or laterally. The plurality of lower protrusions 186 and 188 protrude downward from the bottom surface of the inner shell 180.

Four lower protrusions 186 and 188 are disposed on the bottom surface of the inner shell 180, spaced apart longitudinally and laterally.

A lower rib 190 is disposed on the bottom surface of the inner shell 180 to connect together two lower protrusions 186 and 188 that are spaced longitudinally. When the inner shell 180 is placed over the middle tray 200, the lower rib 190 may be spaced a certain distance upward from a upper surface of the middle tray 200.

Two lower ribs 190 are disposed on the bottom surface of the inner shell 180, spaced apart laterally. The two lower ribs 190 are disposed on the left and right sides of the shell through-hole 184. A first lower rib 190a disposed on one side of the shell through-hole 184 and a second lower rib 190b disposed on the other side of the shell through-hole 184 are disposed on the bottom surface of inner shell 180.

A fixing projection 194 is disposed on the bottom surface of the inner shell 180 to fix the inner shell 180 in place. The fixing projection 194 is disposed at the front of the bottom surface of the inner shell 180. The fixing projection 194 is disposed in front of the exhaust connecting tube 192. The fixing projection 194 is disposed in front of the shell through-hole 184.

A fixing slit 194a is formed at one portion of a circumferential surface of the fixing projection 194. A fixing rib 212 of the middle tray 200 to be described later may be inserted into the fixing slit 194a.

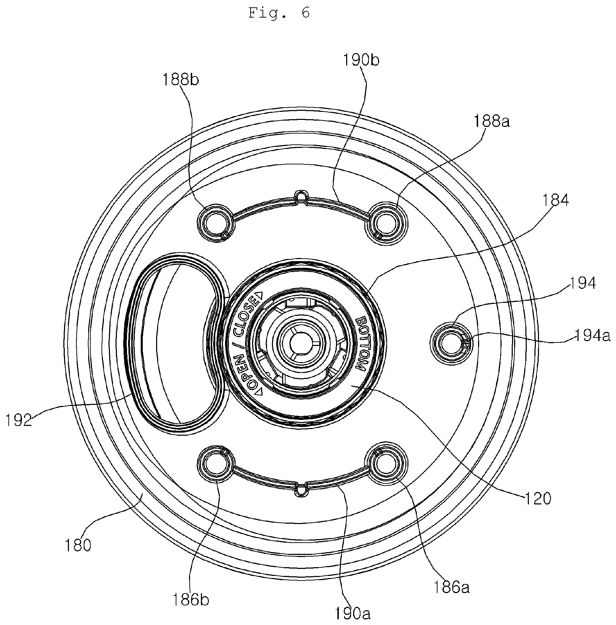

Referring to FIG. 6, a configuration of components on the bottom surface of the inner shell 180 will be described.

The shell through-hole 184 is formed in the center of the inner shell 180. Part of the construction of the connector 120 is placed in the shell through-hole 184.

The exhaust connecting tube 192 is disposed at the rear of the shell through-hole 184. The fixing projection 194 is disposed in front of the shell through-hole 184. The fixing slit 194a is formed in front of the fixing projection 194.

The plurality of lower protrusions 186 and 188 are disposed on the left and right sides of the shell through-hole 184.

First lower protrusions 186 disposed on one side of the shell through-hole 184 and second lower protrusions 188 disposed on the opposite side of the first lower protrusions 186 relative to the shell through-hole 184 are formed on the bottom surface of the inner shell 180.

The first lower protrusions 186 include a first front lower protrusion 186a and a first rear lower protrusion 186b disposed at the rear of the first front lower protrusion 186a. The first lower rib 190a connects the first front lower protrusion 186a and the first rear lower protrusion 186b.

The second lower protrusions 188 include a second front lower protrusion 188a and a second rear lower protrusion 188b disposed at the rear of the second front lower protrusion 188a. The second lower rib 190b connects the second front lower protrusion 188a and the second rear lower protrusion 188b.

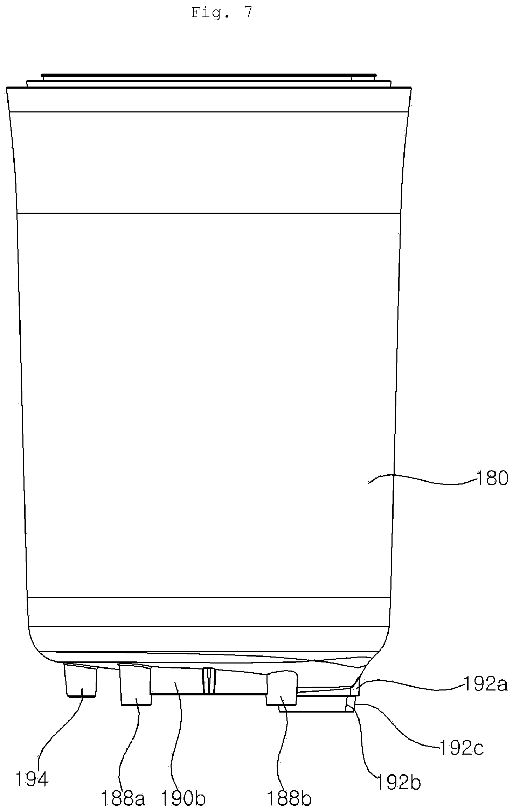

Referring to FIG. 7, the heights of components on the bottom surface of the inner shell 180 will be described.

Lower ends of the plurality of lower protrusions 186 and 188 may be formed at the same vertical position.

Lower ends of the lower ribs 190 may be disposed higher than the lower ends of the lower protrusions 186 and 188. A lower end of the fixing projection 194 may be disposed higher than the lower ends of the lower protrusions 186 and 188. A lower end of the exhaust connecting tube 192 may be disposed lower than the lower ends of the lower protrusions 186 and 188.

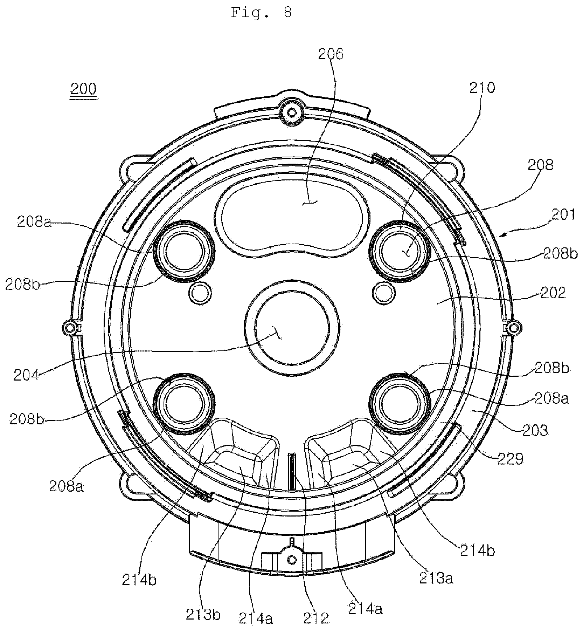

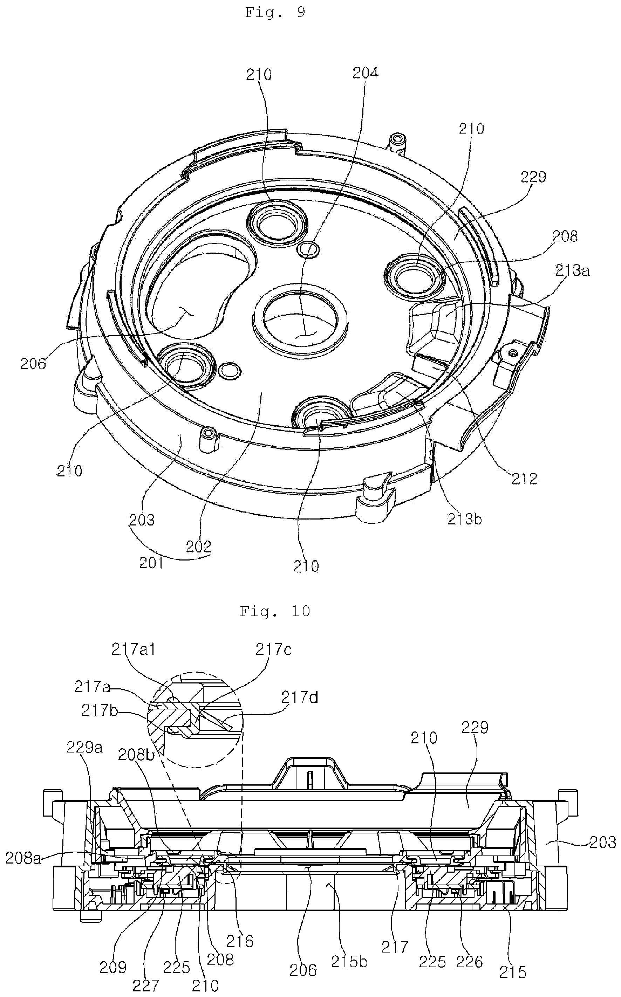

Hereinafter, the middle tray will be described with reference to FIGS. 8 and 9.

The humidifier includes a middle tray 200 that separates an area where the water tank 100 is placed and an area where the humidification module is placed. The middle tray 200 may detect the water level in the water tank 100. The middle tray 200 may emit light onto discharged humidified air.

The middle tray 200 is disposed under the water tank 100. The middle tray 200 is disposed under the inner shell 180. The middle tray 200 is disposed over the humidification module. The weight sensors 226 and 227 may be disposed on the middle tray 200 to detect the water level in the water tank 100 by their weight.

A lamp 229a may be disposed on the middle tray 200 to emit light toward the first discharge passage 32.

The middle tray 200 includes a tray body 201 and a lamp housing 229 disposed around an inner circumferential surface of the tray body 201.

The tray body 201 includes a tray plate 202 where the inner shell 180 is seated and a tray peripheral wall 203 disposed around the lamp housing 229.

A plurality of sensor recesses 208 are formed on a upper surface of the tray body 201, set back downwardly for the plurality of lower protrusions 186 and 188 of the inner shell 180 to be inserted therein. Here, the upper surface of the tray body 201 may be a upper surface of the tray plate 202.

A plurality of sensor recesses 208 are formed on the upper surface of the middle tray 200.

The plurality of sensor recesses 208 are spaced laterally and longitudinally.

A sensor recess flange 208a protrudes upward on a circumferential surface of each of the plurality of sensor recesses 208. A rib hole 208b is formed at one portion of the circumferential surface of the sensor recess flange 208a, for the lower rib 190 to penetrate. The rib hole 208b is formed where the lower rib 190 is disposed.

A sensor cover 210 is disposed at each of the plurality of sensor recesses 208. The sensor cover 210 is disposed under the sensor recess flange 208a. The sensor cover 210 may prevent water from moving to the weight sensor 226 and 227 through the sensor recess 208.

The plurality of lower protrusions 186 and 188 of the inner shell 180 may be disposed at the plurality of sensor recesses 208, respectively.

The fixing rib 212 is disposed on the upper surface of the middle tray 200. The fixing rib 212 connected to the fixing projection 194 of the inner shell 180 protrudes on the upper surface of the tray body 201.

The fixing rib 212 is inserted into the fixing slit 194a formed at the fixing projection 194.

A pair of fixing protrusions 213a and 213b are disposed on the upper surface of the middle tray 200, spaced apart on either side of the fixing rib 212. The pair of fixing protrusions 213a and 213b are laterally spaced apart from the fixing rib 212. The pair of fixing protrusions 213a and 213b may make contact with a circumferential surface of the fixing projection 194 of the inner shell 180.

The pair of fixing protrusions 213a and 213b each may have a downward-inclined surface corresponding to a portion of a upper surface thereof. Thus, when the inner shell 180 is placed over the middle tray 200, the pair of fixing protrusions 213a and 213b each may guide the fixing projection 194 in such a way as to be connected to the fixing rib 212.

The pair of fixing protrusions 213a and 213b each include a first inclined surface 214a which is sloped in the direction in which the fixing rib 212 is disposed. The first inclined surface 214a may guide the fixing projection 194 in such a way as to be connected to the fixing rib 212.

The pair of fixing protrusions 213a and 213b each include a second inclined surface 214b which is sloped in the direction in which the sensor recess 208 is disposed. The second inclined surface 214b may form a slope in the direction in which a contiguous sensor recess 208 is disposed. The second inclined surface 214b may guide the lower protrusion 186 and 188 in such a way as to be disposed in the sensor recesses 208.

The first hole 204 is formed on one side of the tray body 201, for a supply tube 230 to penetrate. The first hole 204 may be formed in the center of the tray body 201. Part of the supply tube 230 is disposed over the first hole 204. The connector 120 of the inner reservoir 102 may be connected to the supply tube 230 disposed over the first hole 204.

A first flange is disposed around the first hole 204, protruding upward from the tray body 201. Thus, it is possible to prevent water admitted to the top of the tray body 201 from moving downward from the middle tray 200.

A second hole 206 is formed on the other side of the tray body 201 to allow the humidified air released from the humidification module to move through. The exhaust connecting tube 192 is disposed over the second hole 206.

A second flange is disposed around the second hole 206, protruding upward from the tray body 201. The second flange may prevent the water admitted to the top of the tray body 201 from moving downward from the middle tray 200 through the second hole 206.

The lamp housing 229 is disposed along the periphery of the tray body 201. The lamp housing 229 may be formed in a ring shape. A lamp 229a may be disposed within the lamp housing 229 to emit light upward. One side of the lamp housing 229 may be formed of a material that transmits the light emitted from the lamp 229a.

The middle tray 200 may be disposed in such a way as to cover the top sides of the first humidification reservoir 300 and the second humidification reservoir 350.

The first hole 204 (or hole) may be formed in the middle tray 200 so as to supply the water held in the water tank to the humidification module. The plurality of weight sensors 226 and 227 (see FIG. 10) are disposed at symmetrical positions on the middle tray 200.

The plurality of weight sensors 226 and 227 are respectively disposed under the plurality of sensor recesses 208 formed on the middle tray 200.

The plurality of weight sensors 226 and 227 are disposed symmetrically with respect to the first hole 204. An imaginary line connecting each pair of weight sensors 226 and 227 placed on opposite sides relative to the first hole 204 passes through the first hole 204.

The plurality of weight sensors 226 and 227 may be equally spaced from the center of the first hole 204.

The center point of a polygon formed by the plurality of weight sensors 226 and 227 lies at the first hole 204. An arrangement of the plurality of weight sensors 226 and 227 disposed under the plurality of sensor recesses 208 forms a polygonal structure. As such, the center point of the polygonal structure formed by the arrangement of the plurality of weight sensors 226 and 227 lies at the first hole 204.

Here, the center point may be the center of the area of the polygonal structure.

Referring to FIG. 10, components of the middle tray in relation to the weight sensors and connections between them will be described.

The middle tray 200 includes a tray body 201 and a tray base 215 disposed under the tray body 201. A space within which the components are placed is formed between the tray base 215 and the tray body 201.

The tray body 201 includes a tray plate 202 forming a top surface and a tray peripheral wall 203 forming a circumferential surface.

The lamp housing 229 is disposed between the tray plate 202 and the tray peripheral wall 203.

The weight sensors 226 and 227 are placed on the tray base 215. A press body 225 is disposed aboveeach of the weight sensors 226 and 227. A sensor cover 210 is placed over the press body 225.

The sensor recesses 208 are formed on the tray plate 202. Sensor recess flanges 208a are disposed on the tray plate 202, protruding upward from the peripheries of the sensor recesses 208. Cover ribs 209 are disposed on the tray plate 202, protruding inward from where the sensor recesses 208 are formed. The cover ribs 209 protrude inward from lower end portions of the sensor recess flanges 208a.

The sensor cover 210 may be mounted on each of the cover ribs 209. The sensor cover 210 may be formed in such a way that an outer peripheral edge thereof covers the cover rib 209. The sensor cover 210 may be formed in such a way that an outer peripheral edge thereof covers the top and bottom of the cover rib 209.

The sensor cover 210 may be disposed in such a way as to make contact with the press body 225. The sensor cover 210 may prevent water from entering the middle tray 200 through the sensor recess 208.

An exhaust hole 215b is formed in the tray base 215, under the second hole 206. An exhaust hole rib 216 is disposed on the tray base 215, protruding inward from where the exhaust hole 215b is formed. The exhaust hole rib 216 is disposed under the tray plate 202.

A tray sealer 217 is disposed at the exhaust hole 215b formed in the tray base 215 to prevent water from entering an inside space of the middle tray 200.

The tray sealer 217 has a structure that covers upper and lower parts of the exhaust hole rib 216. The tray sealer 217 includes an upper tray sealer 217a disposed over the exhaust hole rib 216, a lower tray sealer 217b disposed under the exhaust hole rib 216, and a vertical portion 217c connecting the upper tray sealer 217a and the lower tray sealer 217b.

At least one projection 217a1 is formed on a top surface of the upper tray sealer 217a, protruding upward toward the tray body 201.

An inner protrusion 217d is formed on an inner peripheral edge of the tray sealer 217, protruding radially inward. The inner protrusion 217d protrudes inward toward the exhaust hole 215b from the vertical portion 217c. The inner protrusion 217d may be sloped downward toward the center of the exhaust hole 215b.

The lamp 229a may be disposed under the lamp housing 229.

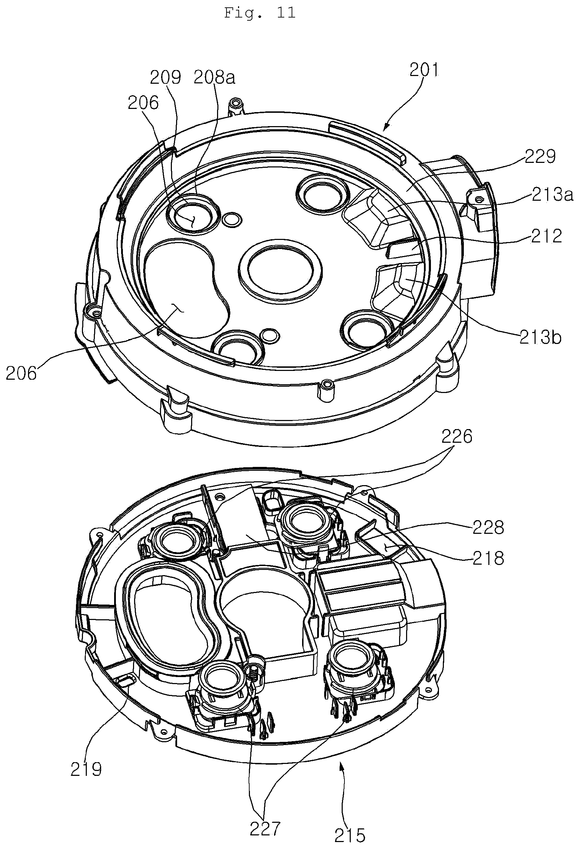

Referring to FIG. 11, a structure of the middle tray will be described additionally.

The middle tray 200 includes a tray body 201 and a tray base 215. The lamp housing 229 is placed on the tray body 201.

The tray body 201 has a first hole 204 for the supply tube 230 to penetrate and a second hole 206 for the humidified air generated by the humidification module to move through. The tray body 201 has a plurality of sensor recesses 208 for fixing the inner shell 180 in place.

The sensor recess flanges 208a, which respectively protrude upward from the circumferential surfaces of the plurality of sensor recesses 208, and the cover ribs 209, which respectively protrude inward from where the plurality of sensor recesses 208 are formed, are disposed on the tray body 201.

The fixing rib 212 and the pair of fixing protrusions 213a and 213b disposed on either side of the fixing rib 212 and spaced apart from each other, are disposed on the tray body 201.

A supply tube hole 215a formed under the first hole 204 and an exhaust hole 215b formed under the second hole 206 are formed in the tray base 215.

The plurality of weight sensors 226 and 227 are placed on the tray base 215. The plurality of weight sensors 226 and 227 are respectively disposed under the plurality of sensor recesses 208 formed on the tray body 201.

On the tray base 215, a plurality of press bodies 225 are disposed over the plurality of weight sensors 226 and 227, respectively. The plurality of press bodies 225 are disposed in such a way as to make contact with the plurality of weight sensors 226 and 227, respectively.

A sensor circuit board 228 connected to the plurality of weight sensors 226 and 227 is placed on the tray base 215.

A wire hole 218 through which a wire passes is formed in the tray base 215.

A tray drain hole 219 is formed in the tray base 215 to send water admitted into the middle tray 200 to the outside.

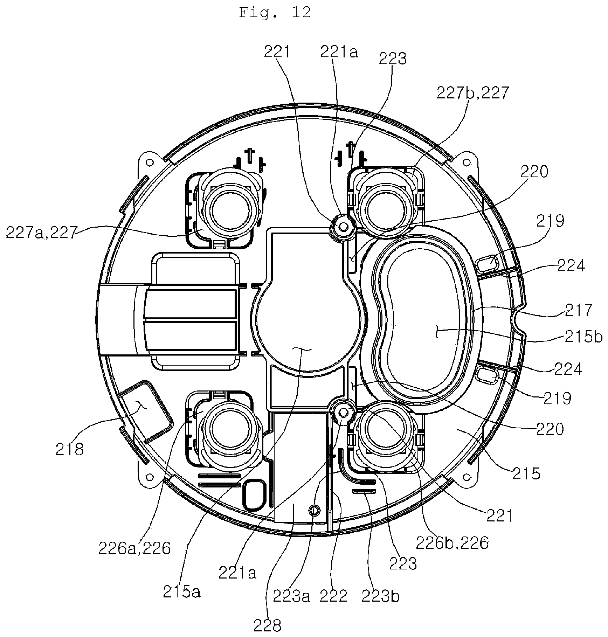

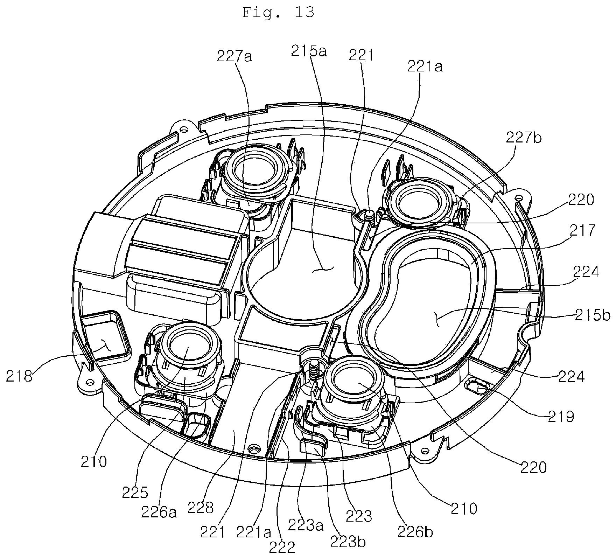

Referring to FIGS. 12 and 13, a drainage structure inside the tray base will be described.

The tray sealer 217 is disposed around the exhaust hole 215b. The tray sealer 217 may prevent water from getting inside through the gap between the tray body 201 and the tray base 215.

The plurality of weight sensors 226 and 227 are placed on the tray base 215. On the tray base 215, first weight sensors 226 are disposed on one side of the supply tube hole 215a, and second weight sensors 227 are disposed on the opposite side of the first weight sensors 226 relative to the supply tube hole 215a.

The first weight sensors 226 include a first front weight sensor 226a and a first rear weight sensor 226b disposed at the rear of the first front weight sensor 226a. The second weight sensors 227 include a second front weight sensor 227a and a second rear weight sensor 227b disposed at the rear of the second front weight sensor 227a.

The sensor circuit board 228 is disposed between the first front weight sensor 226a and the first rear weight sensor 226b.

A circuit board partition 222 is placed on the tray base 215, protruding upward from the rear of the sensor circuit board 228.

The sensor circuit board 228 is disposed in front of the exhaust hole 215b. The sensor circuit board 228 is disposed on one lateral side of the supply tube hole 215a.

The first rear weight sensor 226b and the second rear weight sensor 227b are disposed on either side of the exhaust hole 215b. The exhaust hole 215b is disposed between the first rear weight sensor 226b and the second rear weight sensor 227b.

The first rear weight sensor 226b is disposed at the rear of the sensor circuit board 228.

A pair of guide grooves 220 are formed in front of the exhaust hole 215b to guide the movement of water admitted through the exhaust hole 215b. The pair of guide grooves 220 each have a structure that extends laterally. The pair of guide grooves 220 each send water admitted through a peripheral area of the exhaust hole 215b to the fronts of the first rear weight sensor 226b and the second rear weight sensor 227b.

One of the pair of guide grooves 220 sends the water admitted through the peripheral area of the exhaust hole 215b to a space between the first rear weight sensor 226b and the sensor circuit board 228.

A pair of fastening portions 221 connecting the tray body 201 and the tray base 215 are disposed in front of the exhaust hole 215b. Each of the fastening portions 221 forms a space where a fastening member is placed.

Each of the fastening portions 221 has an opening 221a on one side. The openings 221a respectively formed on the pair of fastening portions 221 are formed in such a way as to face the fronts of the first rear weight sensor 226b and the second rear weight sensor 227b, respectively.

Water moving along the pair of guide grooves 220 may move to the pair of fastening portions 221, respectively. The water moving to the pair of fastening portions 221 may move to the fronts of the first rear weight sensor 226b and the second rear weight sensor 227b.

The water moving to one of the pair of fastening portions 221 may move between the first rear weight sensor 226b and the sensor circuit board 228 through the opening 221a.

On the tray base 215, upward-protruding ridges may be formed where the weight sensors 226 and 227a are placed. On the tray base 215, weight sensor partitions 223 may be disposed around where the weight sensors 226 and 227 are placed.

The tray drain hole 219 is disposed at the rear of the exhaust hole 215b. Water admitted to the rear of the exhaust hole 215b may move directly to the tray drain hole 219.

Incidentally, the water admitted to the front of the exhaust hole 215b may move along the peripheries of the weight sensors 226 and 227 through the guide grooves 220 and then move to the tray drain hole 219. The water admitted to the front of the exhaust hole 215b may move to the tray drain hole 219 through the guide grooves 220 and the fastening portions 221.

A drain hole partition 224 is disposed at the rear of the tray base 215. The drain hole partition 224 is disposed on one side of the tray drain hole 219. The drain hole partition 224 allows water moving along the tray base 215 to be drained through the tray drain hole 219.

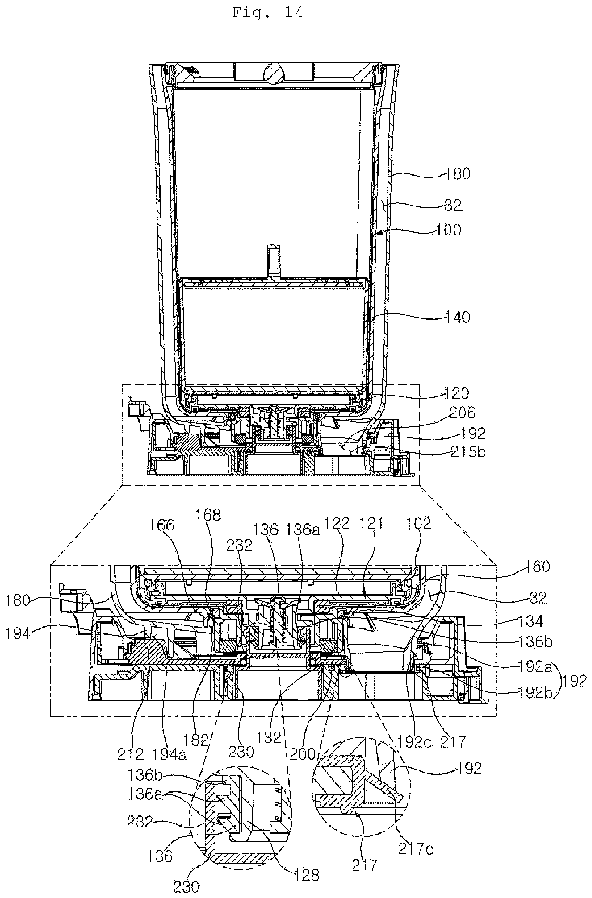

Referring to FIG. 14, the connection between the middle tray 200 and the inner shell 180 while the inner shell 180 is mounted and the configuration of the components related thereto will be described. Also, the connections between the inner shell, the water tank, and the supply tube will be described.

The first discharge passage 32 is formed between the inner shell 180 and the water tank 100.

The water softener 140 is placed within the water tank 100.

The fixing rib 212 of the middle tray 200 is inserted into the fixing slit 194a formed on the fixing projection 194 on the inner shell 180. With the fixing rib 212 inserted in the fixing slit 194a, an upper end of the fixing rib 212 is disposed to be spaced apart from the inner shell 180. Thus, the load of the inner shell 180 is not transferred to the fixing rib 212.

The exhaust connecting tube 192 on the inner shell 180 is inserted into the second hole 206 of the middle tray 200. The exhaust connecting tube 192 is disposed in such a way as to make contact with the tray sealer 217. The exhaust connecting tube 192 is disposed over the tray sealer 217.

The tray sealer 217 is sloped downward. Thus, the exhaust connecting tube 192 on the inner shell 180 is disposed over the tray sealer 217 to make contact with it.

The exhaust connecting tube 192 includes a first exhaust connecting tube 192a disposed over the middle tray 200 and a second exhaust connecting tube 192b extending downward from the first exhaust connecting tube 192a. A stepped portion 192c is formed between the first exhaust connecting tube 192a and the second exhaust connecting tube 192b. A lower end of the first exhaust connecting tube 192a is spaced a certain distance upward from the upper surface of the middle tray 200.

The second exhaust connecting tube 192b penetrates the second hole 206. A lower end portion of the second exhaust connecting tube 192b is disposed in such a way as to make contact with the tray sealer 217.

Although not shown, the supply tube 230 may be connected to the connector 120 via the first hole 204 of the middle tray 200.

Hereinafter, the connections between the inner shell, the water tank, the connector, and the supply tube which are disposed above or below the middle tray will be described additionally.

The inner reservoir 102 is disposed within the outer reservoir 160. The inner reservoir 102 is disposed in such a way to make contact with the outer reservoir 160. The outer reservoir 160 includes a lower rim 166 protruding downward from a lower surface of the outer reservoir 160.

An inner projection 168 is disposed on an inner circumferential surface of the lower rim 166, protruding inward. The inner projection 168 is disposed in such a way as to make contact with an outer sealer 134 of a connector holder 132. The inner projection 168 is disposed over the upper rim 182 of the inner shell 180.

The inner shell 180 is placed around the periphery of the outer reservoir 160. The outer reservoir 160 and the inner shell 180 are spaced apart from each other. The first discharge passage 32 is formed between the outer reservoir 160 and the inner shell 180.

Part of the connector 120 is disposed in such a way as to penetrate the bottom surface of the inner shell 180. The inner shell 180 includes an upper rim 182 protruding upward from the periphery of the shell through-hole 184 formed in the bottom surface thereof.

The upper rim 182 is disposed inside the lower rim 166. An upper end of the upper rim 182 makes contact with the inner projection 168 which protrudes from an inner circumferential surface of the lower rim 166.

The connector 120 may include a connector body 121 and a connector holder 132. The connector body 121 may include a connector plate 122 and a connector pipe 128 extending downward from the connector plate 122.

The connector plate 122 is disposed under the water softener 140. The connector plate 122 is connected to the water softener 140.

An inner sealer 136 is placed around the outer periphery of the connector pipe 128. When the connector 120 is placed above the supply tube 230, the inner sealer 136 may seal the gap between the connector 120 and the supply tube 230.

The inner sealer 136 may be formed of a rubber material that can change its configuration. The inner sealer 136 is disposed in such a way as to make contact with the outer periphery of the connector pipe 128. An outwardly protruding part may be formed on a lower end of the connector pipe 128 so as to keep the inner sealer 136 from moving downward.

The inner sealer 136 includes a sealing projection 136a which protrudes outward. The inner sealer 136 includes a plurality of sealing projections 136a which protrude outward and are vertically spaced apart.

The sealing projection 136a may be formed to have a larger diameter toward the top. In a cross-sectional view, the sealing projection 136a may have the shape of a triangle whose top face has a large area.

The diameter of an outer peripheral edge of the sealing projection 136a may be larger than the diameter of an inner circumferential surface of an inlet port 232 of the supply tube 230.

The inner sealer 136 includes an upper end projection 136b which is disposed above the sealing projection 136a and protrudes radially outward. The upper end projection 136b may make contact with an upper end portion of the inlet port 232 of the supply tube 230.

The connector holder 132 is disposed in such a way as to be fixed to the outer periphery of the connector pipe 128. The connector holder 132 may be disposed under the bottom side of the inner reservoir 102. The bottom side of the inner reservoir 102 is disposed between the connector holder 132 and the connector plate 122.

The outer sealer 134 disposed on an outer circumferential surface of the connector holder 132 is disposed in such a way as to make contact with the inner projection 168 of the outer reservoir 160. The outer sealer 134 may be disposed in such a way as to make contact with the upper rim 182 of the inner shell 180.

Part of the construction of the connector 120 protrudes outward from the outer reservoir 160.

A bottom part of the connector 120 is connected to the inlet port 232 of the supply tube 230. The inner sealer 136 disposed on the outer circumferential surface of the connector pipe 128 makes contact with the inner circumferential surface of the inlet port 232. The plurality of sealing projections 136a of the inner sealer 136 may make contact with the inner circumferential surface of the inlet port 232.

The inner sealer 136 and the inlet port 232 may overlap 0.3 to 0.7 mm around the entire perimeter. The diameter of an outer peripheral edge of the inner sealer 136 may be 0.3 to 0.7 mm larger than the diameter of an inner peripheral edge of the inlet port 232.

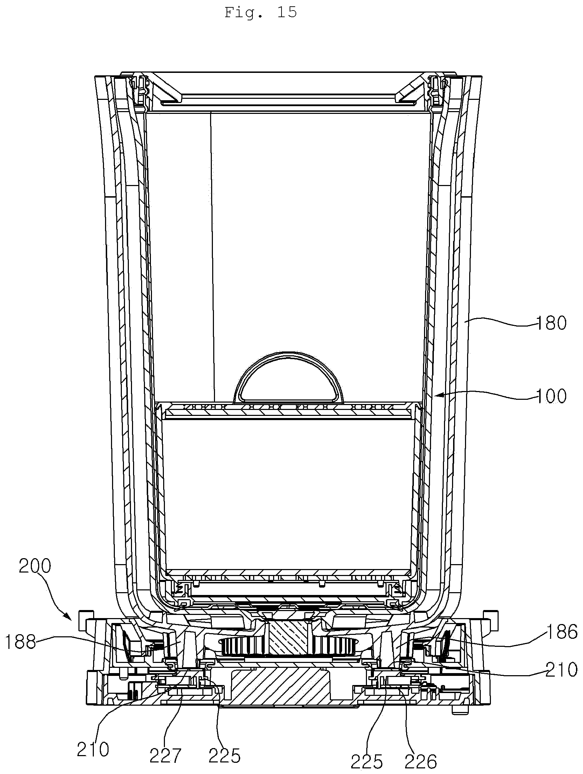

Referring to FIG. 15, the connection between the middle tray 200 and the inner shell while the inner shell is mounted and the configuration of the components related thereto will be described.

The lower protrusions 186 and 188 of the inner shell 180 are disposed on the sensor recesses 208 of the middle tray 200. The lower protrusions 186 and 188 of the inner shell 180 are disposed over the weight sensors 226 and 227 of the middle tray 200. The sensor cover 210 is disposed between the lower protrusion 186 and 188 and the weight sensor 226 and 227. The lower protrusion 186 and 188 is disposed in such a way as to make contact with the sensor cover 210.

The press body 225 is disposed under the sensor cover 210. The press body 225 is disposed between the sensor cover 210 and the weight sensor 226 and 227.

When the inner shell 180 is disposed over the middle tray 200, the plurality of lower protrusions 186 and 188 are disposed in such a way as to make contact with the plurality of sensor covers 210, respectively. Thus, the load of the water tank 100 including the inner shell 180 may be transferred to the weight sensors 226 and 227.

## Claims

1. A humidifier comprising:
a water tank (100) configured to form a space for storing water;
a humidification module (300, 350) disposed below the water tank (100) and configured to generate humidified air using water supplied from the water tank (100);
a middle tray (200) disposed between the humidification module (300, 350) and the water tank (100), and including a plurality of weight sensors configured to sense a weight of the water tank (100); and
an inner shell (180) disposed below the water tank (100) and configured to transfer a load of the water tank (100) to the middle tray (200),
wherein a plurality of lower protrusions (186, 188) are disposed on the bottom of the inner shell (180) and configured to press the plurality of weight sensors (226, 227), respectively,
wherein the middle tray (200) includes a hole (204) formed to supply the water stored in the water tank (100) to the humidification module (300, 350), and
wherein the plurality of weight sensors (226, 227) are disposed spaced apart around the hole (204).

2. The humidifier of claim 1, wherein the middle tray (200) includes a plurality of sensor recesses (208) which are set back downwardly such that the plurality of lower protrusions (186, 188) are respectively positioned thereon.

3. The humidifier of claim 1, or 2, wherein a sensor cover (210) is disposed on each of the sensor recesses (208) to cover the top of the weight sensor (226, 227).

4. The humidifier of claim 3, wherein a sensor recess flange (208a) protrudes upward from a circumferential surface of each of the plurality of sensor recesses (208), and the sensor cover (210) is disposed under the sensor recess flange (208a).

5. The humidifier of claim 4, wherein a cover rib (209) is disposed to protrude inward from an inner circumferential surface of the sensor recess flange (208a), and the sensor cover (210) is mounted on the cover rib (209).

6. The humidifier of any one of claims 1 to 5, wherein the plurality of weight sensors (226, 227) are spaced apart longitudinally and laterally relative to the hole (204).

7. The humidifier of any one of claims 1 to 6, wherein, when the inner shell (180) is disposed on the middle tray(200), the plurality of lower protrusions (186, 188) are respectively disposed on the plurality of weight sensors (226, 227).

8. The humidifier of any one of claims 1 to 7, wherein the inner shell (180) includes a fixing projection (194) protruding downward to fix the inner shell (180),
wherein the fixing projection (14) is spaced apart from the plurality of lower protrusions (186, 188).

9. The humidifier of claim 8, wherein a fixing slit (194a) is formed on one side of a circumferential surface of the fixing projection (194), and a fixing rib (212) to be inserted into the fixing slit (194a) is disposed on the middle tray (200).

10. The humidifier of claim 9, wherein, when the fixing rib (212) is inserted into the fixing slit (194a), an upper end of the fixing rib (212) is spaced apart from the inner shell (180).

11. The humidifier of claim 9, wherein the middle tray (200) includes a pair of fixing protrusions (213a, 213b) spaced apart on either side of the fixing rib (212).

12. The humidifier of claim 11, wherein each of the pair of fixing protrusions include a first inclined surface inclined in a direction in which the fixing rib is disposed.

13. The humidifier of any one of claims 1 to 12, wherein the inner shell (180) includes a shell through-hole (184) formed above the hole (204),
wherein the inner shell (180) includes:
a pair of first lower protrusions (186) disposed on one side of the shell through-hole (184);
a pair of second lower protrusions (188) disposed on the opposite side of the shell through-hole (184) with respect to the pair of first lower protrusions (186); and
a first connecting rib (190a) connecting the pair of first lower protrusions (186) each other; and
a second connecting rib (190b) connecting the pair of second lower protrusions (188) each other.

14. The humidifier of claim 13, wherein each of the first connecting rib (190a) and the second connecting rib (190b) is spaced apart by a predetermined distance from a upper surface of the middle tray (200).

15. The humidifier of any one of claims 1 to 14, wherein a sensor cover (210) is disposed on the sensor recesses (208) to cover the upper side of the weight sensor (226, 227), and
wherein the middle tray (200) includes a press body (225) disposed between the sensor cover (210) and the weight sensor (226, 227).
